# EUROPÄISCHE PATENTSCHRIFT

(11) **EP 2 766 967 B1**
(45) Veröffentlichungstag und Bekanntmachung des Hinweises auf die Patenterteilung: **08.07.2015**
(21) Anmeldenummer: 12783857.1
(22) Anmeldetag: 10.10.2012
(51) Int. Cl.: H02G 15/10, H02G 15/117

(54) **ABSTANDSHALTER IN KABELVERBINDUNGSMUFFEN**
SPACERS IN CABLE SPLICING SLEEVES
ESPACEURS UTILISÉS DANS DES BOÎTES DE JONCTION

(30) Priorität: 11.10.2011 DE 102011115521
(43) Veröffentlichungstag der Anmeldung: 20.08.2014
(73) Patentinhaber: Mankiewicz Gebr. & Co. GmbH & Co. KG, 21107 Hamburg (DE)
(72) Erfinder: JOHN, Günther, 21493 Schwarzenbek (DE); SACHSE, Manuel, 22119 Hamburg (DE); BOGUMIL, Mark, 25364 Osterhorn (DE)
(86) Internationale Anmeldenummer: PCT/DE2012/000988
(87) Internationale Veröffentlichungsnummer: WO 2013/053349

(56) Entgegenhaltungen:
- DE-A1- 3 527 658
- DE-U1-202010 002 004
- US-A1- 2007 144 762
- US-B1- 7 518 058

## Beschreibung

Die Erfindung betrifft Abstandshalter zwischen Adern eines mehradrigen, elektrischen Kabels zur Vermeidung eines Kurzschlusses. Die Erfindung betrifft auch die Verwendung der erfindungsgemäßen Abstandshalter in Kabelverbindungsmuffen insbesondere in mit isolierenden Massen ausgießbaren Verbindungsmuffen.

Zum Austausch defekter oder beschädigter Stellen in elektrischen Kabeln werden die Kabel durchtrennt und der beschädigte Abschnitt durch ein neues Kabelstück ersetzt. Dabei müssen die Kabelenden so miteinander verbunden werden, dass zum einen die Kabel ohne Beeinträchtigungen und Leistungsabfall wieder durchgängig sind und zum anderen die Verbindungsstellen ausreichend isoliert sind. Gleiche Anforderungen gelten bei Verlängerung und Abzweigung von Kabeln. Bisher werden insbesondere bei Erdkabeln Kabelverbindungsmuffen eingesetzt, welche die mit Hilfe von Verbindern verbundene Kabeladern in einer isolierenden Masse enthalten. Die so verbundenen Adern werden mit einer Muffe umhüllt und diese Muffe anschließend mit einer isolierenden Masse ausgegossen. Abstandshalter werden üblicherweise eingesetzt, um Kurzschlüsse durch Kontakt zwischen unisolierten Aderabschnitten oder Verbindern zu verhindern.

Aus DE 20 2010 002 004 sind Abstandshalter zum Beabstanden der verbundenen Adern von gespleißten mehradrigen Kabeln in einer Verbindungsmuffe bekannt, die einen Kern und daran zu befestigende Trennarme aufweisen. Durch das Befestigen einer variablen Anzahl von Trennarmen am Kern kann die Anzahl der für die Adern benötigten Aufnahmebereiche erhalten werden. Durch das erforderliche Zusammensetzen des Abstandshalters aus einer Reihe von Einzelteilen ist die Handhabung umständlich. Auch sind gerade bei Abstandshaltern mit geringen Durchmessern die Einzelteile vergleichsweise klein und entsprechend mühsam zusammenzusetzen. Darüber hinaus sind für den jeweiligen Durchmesser der Muffe angepasste Abstandshalter notwendig, um auch beim Ausgießen der Muffe mit der isolierenden Masse eine sichere Platzierung zu gewährleisten.

Aus, US 2007/144762 A1 ist ein Abstandshalter bekannt. Aufgabe der vorliegenden Erfindung ist es daher, verbesserte Abstandshalter zur Verfügung zu stellen, die insbesondere einfach zu handhaben sind und die ohne weiteres auch für unterschiedliche Kabelquerschnitte bzw. in Muffen unterschiedlicher Größen eingesetzt werden können.

Gelöst wird die Aufgabe durch Abstandshalter gemäß Anspruch 1 und deren Verwendung gemäß Anspruch 8. Bevorzugte Ausführungsformen sind Gegenstand der Unteransprüche und der Beschreibung.

Der erfindungsgemäße Abstandshalter weist zumindest ein Element auf, das ein Mittelteil und eine Vielzahl an Armen umfasst. Die Arme sind dabei am Mittelteil angebracht und so angeordnet, dass sie sich radial nach außen erstrecken. Erfindungsgemäß bevorzugt weisen alle Arme die gleiche Länge auf.

Die Arme des Elements weisen jeweils zwei oder mehr verdickte Abschnitte auf, die in jeweils gleichem Abstand von einander angeordnet sind. Im Folgenden wird unter der Länge eines Armes die Ausdehnung des Armes vom Mittelteil bis zum seinem äußeren Ende verstanden. Als Verdickungen eines Armes werden Zunahmen bzw. Vergrößerungen in seiner Breite und/oder Höhe bezeichnet. Bevorzugt ist die Verdickung durch eine vergrößerte Höhe des Arms ausgebildet. Die verdickten Abschnitte weisen bevorzugt mindestens die doppelte Höhe des Arms auf. In einer besonders bevorzugten Ausführungsform weisen sie die vierfache Höhe auf. Durch die Veränderung der Höhe bzw. Dicke der Arme werden unterschiedlich flexible Abschnitte ausgebildet. Die dünneren Abschnitte der Arme sind flexibler und wirken daher als Soll-Biegestellen. Bei einer entsprechenden äußeren Belastung verbiegen sich die Arme bevorzugt an oder in diesen dünnen Abschnitten. Aufgrund der elastischen Eigenschaften des Kunststoffs, aus welchem die Elemente hergestellt sind, federn die gebogenen Abschnitte ohne Belastung zurück. Durch das vorgegebene Abbiegen und Zurückfedern der Arme passt sich der Abstandshalter an den Durchmesser der Muffe an. Auf diese Weise kann der Abstandshalter in Kabelmuffen mit unterschiedlichen Durchmessern eingesetzt werden.

Bevorzugt sind die erfindungsgemäßen Abstandshalter im Spritzgussverfahren aus Kunststoff hergestellt. Der eingesetzte Kunststoff muss dabei verträglich zu dem Material der Kabelisolationen, der Verbindungsmuffe und der isolierenden Masse sein, insbesondere auf oder an diesem Material haften. Erfindungsgemäß bevorzugt wird Polyoximethylen POM verwendet. Polyoximethylen POM hat niedrige Reibwerte und ist dimensionsstabil und thermisch stabil. Weiterhin haften Vergussmassen die üblicherweise als isolierendes Material eingesetzt werden, wie Epoxidharze EP und Polyurethane PUR auch unter zyklischer thermischer Belastung auf Polyoximethylen POM.

Erfindungsgemäß weist das Mittelteil an einem Ende eine Aussparung und am gegenüberliegendem Ende einen Vorsprung auf. Dabei entsprechen die Innenmaße der Aussparung den Außenmaßen des Vorsprungs. Dadurch können die Elemente ineinander gesteckt werden, wobei jeweils ein Element mit dem Vorsprung seines Mittelteils in die Aussparung des Mittelteils eines zweiten Elements eingreift. Bevorzugt weisen Vorsprung und Aussparung mindestens drei Kanten, besonders bevorzugt 5 Kanten, auf. Die Kanten des Vorsprungs und der entsprechenden Aussparung sind parallel zueinander angeordnet. Es ist bevorzugt, die Kanten der Aussparung und des Vorsprungs in Bezug zu den Armen des Mittelteils so anzuordnen, dass die Arme aller ineinander gesteckten Elemente parallel übereinander liegen. Auf diese Weise kann die Länge des erfindungsgemäßen Abstandshalter an die Größe bzw. Länge der eingesetzten Kabelmuffe angepasst werden. Durch die Anpassung des Abstandshalters an die Länge der eingesetzten Muffe wird zusätzlich sichergestellt, dass der Abstandshalter in der Muffe an der vorgesehenen Position bleibt und einen Kontakt der verbundenen Adern verhindert auch bei mechanischer Belastung wie durch eine Zugbelastung an den Kabeln oder durch Erschütterungen.

Erfindungsgemäß werden die Abstandshalter zur Beabstandung von verbundenen Adern mehradriger Kabel in einer mit isolierender Masse ausgießbaren Kabelmuffe verwendet. Zur Reparatur und Verlängerung von elektrischen Kabeln im Außenbereich werden wie schon erläutert Kabelverbindungsmuffen eingesetzt, welche die Verbindung zweier Kabelenden wieder isolieren. Als Erdkabel werden üblicherweise 5-adrige Kabel verwendet, deren Adern unterschiedliche Querschnitte aufweisen können. Zur Verbindung von zwei Kabelenden wird das Kabel in seine Adern aufgetrennt, wobei der Kabelmantel und die Primärisolation der Adern entfernt werden. Die einzelnen abisoliert Adern werden über Schraub- oder Pressverbinder mit dem entsprechenden Gegenstück bzw. der entsprechenden Ader des anderen kabelendes verbunden.

Die eingesetzten Verbinder sind üblicherweise Metallhülsen. Sie müssen gegen elektrischen Kontakt isoliert werden, der durch einen zu geringen Abstand, die Berührung der abisolierten Adern oder der Metallverbinder und andere Einflüsse verursacht wird. Die verbundenen Kabelenden werden dazu in einer Kabelmuffe angeordnet oder eingelegt. Die Muffe wird anschließend mit einer isolierenden Masse ausgegossen. Um einen Kontakt der Verbinder und Adern während des Vergießens zu verhindern, werden die einzelnen Adern in einem Abstandshalter angeordnet.

In einer erfindungsgemäß bevorzugten Ausführungsform werden die Adern der beiden Kabelenden mit Schraubverbindern verbunden. Die verbundenen Adern werden zwischen den Armen des erfindungsgemäßen Abstandshalters platziert und der Abstandshalter mit den verbundenen Adern dann in das Unterteil einer zweiteiligen Kabelmuffe eingelegt. Anschließend wird das Oberteil der Kabelmuffe aufgesetzt und mit ihrem Unterteil verbunden. Nach der Abdichtung der Kabelausgänge wird die Muffe mit einer aushärtenden, isolierenden Masse ausgegossen. Geeignete Massen sind die dem Fachmann geläufigen Elektro- und Kabelvergussmassen beispielsweise auf der Basis von Epoxidharzen EP und Polyurethanen PUR, die nach Applikation aushärten. Der Abstandshalter gewährleistet, dass der notwendige Abstand der verbundenen Adern sowohl während der Montage der Muffe als auch während des Aushärtens der Masse beibehalten wird.

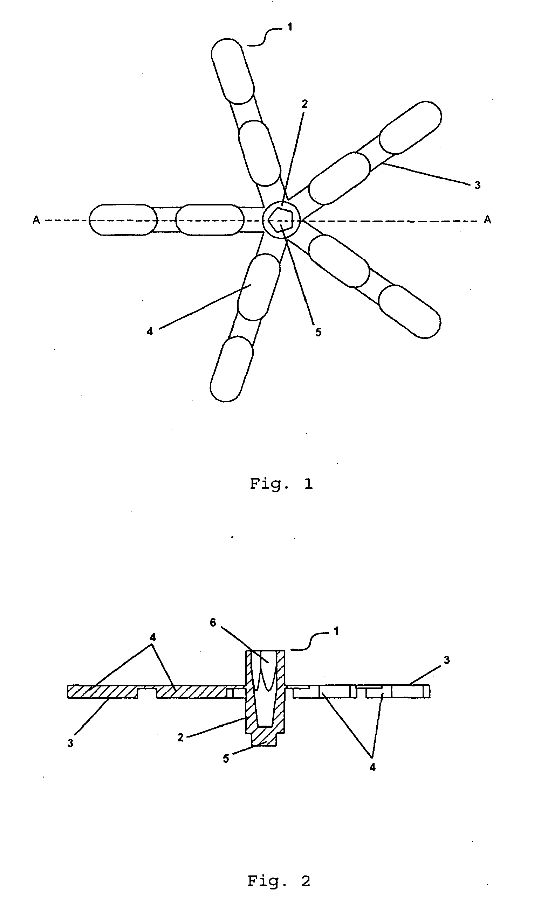

Weitere Ausführungsformen der vorliegenden Erfindung werden anhand der in den folgenden Figuren dargestellten Beispiele erläutert. Fig. 1 zeigt ein erfindungsgemäßes Element (1) in der Draufsicht. Es umfasst ein Mittelteil (2) an dem radial fünf Arme (3) angeordnet sind. In dieser Art der Darstellung ist nur der Vorsprung (5) des Mittelteils sichtbar. Der Vorsprung ist in diesem Beispiel in Form eines Außenfünfkants ausgebildet. Jeder der Arme (3) weist in regelmäßigen Abständen Verdickungen (4) auf.

Fig. 2 zeigt einen Querschnitt eines Elements (1) entlang der Linie A-A. Das Mittelteil weist an dem Ende, das dem Vorsprung (5) in Form eines Außenfünfkants gegenüber liegt, eine Aussparung (6) in Form eines Innenfünfkants auf. Außen- und Innenfünfkant der Elemente sind so ausgestaltet, dass mehrere Elemente fest ineinander gesteckt werden können. Diese Steckverbindung kann nur unter Aufwendung einer gewissen Kraft wieder gelöst werden. Auf diese Weise kann die Länge des erfindungsgemäßen Abstandshalter einfach an die Größe der eingesetzten Kabelmuffe angepasst werden.

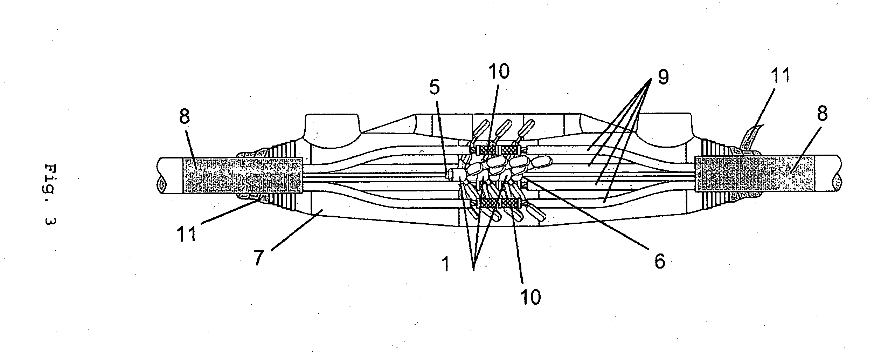

Fig. 3 zeigt eine Kabelmuffe (7), welche einen erfindungsgemäßen Abstandshalter enthält. Der Abstandshalter ist aus drei Elementen (1) zusammengesetzt, wobei jeweils der Vorsprung (5) am Mittelteil eines Elements (1) in die Aussparung (6) im Mittelteil eines zweiten Elements (1) eingreift. Der erfindungsgemäße Abstandshalter wird zwischen den über Schraub- oder Pressverbinder (10) verbundenen Adern (9) der Kabelenden (8) angebracht, so dass die Adern (9) einzeln zwischen den Armen der Elemente (1) liegen. Die verbundenen Adern (9) sind mit dem zwischen ihnen angebrachten Abstandshalter in der Kabelmuffe (7) angeordnet. Die Durchführungen für die Kabelenden (8) sind mit Isolierband (11) abgedichtet. Die so vorbereitete Muffe wird mit einer Kabelvergußmasse ausgegossen.

## Patentansprüche

1. Abstandshalter zur Beabstandung von verbundenen Kabeladern (9) in einer Kabelverbindungsmuffe (7) umfassend zumindest ein Element (1) aufweisend ein Mittelteil (2) und eine Vielzahl Arme (3), die am Mittelteil (2) angebracht sind und sich radial nach außen erstrecken, **dadurch gekennzeichnet, dass** das Mittelteil (2) an einem Ende eine Aussparung (6) und an dem gegenüberliegendem Ende einen Vorsprung (5) aufweist, wobei die Innenmaße der Aussparung (6) den Außenmaßen des Vorsprungs (5) entsprechen.

2. Abstandshalter nach Anspruch 1, **dadurch gekennzeichnet, dass** die Arme (3) des Elements (1) in jeweils gleichem Abstand zumindest zwei verdickte Abschnitte (4) aufweisen.

3. Abstandshalter nach Anspruch 2, **dadurch gekennzeichnet, dass** die verdickten Abschnitte (4) mindestens die doppelte Höhe des Arms (3) aufweisen, bevorzugt die vierfache Höhe des Arms (3) aufweisen.

4. Abstandshalter nach einem der voranstehenden Ansprüche, **dadurch gekennzeichnet, dass** der Vorsprung (5) und die entsprechende Aussparung (6) mindestens drei Kanten aufweisen, bevorzugt 5 Kanten aufweisen.

5. Abstandshalter nach einem der voranstehenden Ansprüche, **dadurch gekennzeichnet, dass** die Kanten des Vorsprungs (5) und der entsprechenden Aussparung (6) parallel zueinander angeordnet sind.

6. Abstandshalter nach einem der voranstehenden Ansprüche, **dadurch gekennzeichnet, dass** der Abstandshalter zwei oder mehr Elemente (1) aufweist, wobei jeweils ein Element (1) mit dem Vorsprung (5) seines Mittelteils (2) in die Aussparung (6) eines zweiten Elements (1) eingreift.

7. Verwendung eines Abstandshalters nach einem der Ansprüche 1 bis 6 zur Beabstandung von verbundenen Adern (9) mehradriger Kabel in einer mit isolierender Masse ausgießbaren Kabelmuffe (7).

## Claims

1. A spacer for spacing apart bound cable cores (9) in a cable junction box (7) comprising at least one element (1) containing a central section (2) and a plurality of arms (3), which are mounted on the central section (2) and extend radially and outwardly, **characterised in that** the central section (2) has at one end a recess (6) and at the opposite end a protrusion (5), whereas the inner sizes of the recess (6) match the outer sizes of the protrusion (5).

2. A spacer according to claim 1, **characterized in that** the arms (3) of the element (1) have at least two thickened sections (4) respectively at the same distance.

3. A spacer according to claim 2, **characterised in that** the thickened sections (4) have at least twice the height of the arm (3), preferably four times the height of the arm (3).

4. A spacer according to one of the previous claims, **characterised in that** the protrusion (5) and the corresponding recess (6) have at least three edges, preferably 5 edges.

5. A spacer according to one of the previous claims, **characterised in that** the edges of the protrusion (5) and the corresponding recess (6) are arranged parallel to one another.

6. A spacer according to one of the previous claims, **characterised in that** the spacer has two or more elements (1) whereas respectively one element (1) meshes into the recess (6) of a second element (1) with the protrusion (5) of its central portion (2).

7. The use of a spacer according to one of the claims 1 to 6, for spacing apart bound wires (9) of multi-wired cables in a cable coupler (7) which is thermally hardenable with insulating mass.

## Revendications

1. Entretoise permettant d'espacer des conducteurs de câbles liés (9) dans une boîte de raccordement de câbles (7) comprenant au moins un élément (1) englobant une partie intermédiaire (2) et une pluralité de bras (3), montés sur la partie intermédiaire (2) et s'étendant radialement vers l'extérieur, **caractérisée en ce que** la partie intermédiaire (2) comporte en son extrémité un évidement (6) et une protubérance (5) à l'extrémité opposée, où les cotes internes de l'évidement (6) correspondent aux cotes externes de la protubérance (5).

2. Entretoise selon la revendication 1, **caractérisée en ce que** les bras (3) de l'élément (1) présentent au moins deux sections épaissies (4) espacées de la même distance.

3. Entretoise selon la revendication 2, **caractérisée en ce que** les sections épaissies (4) présentent au moins le double de la hauteur du bras (3), de préférence le quadruple de la hauteur du bras (3).

4. Entretoise selon l'une des revendications précédentes, **caractérisée en ce que** la protubérance (5) et l'évidement correspondant (6) présentent au moins trois tranches, de préférence 5 tranches.

5. Entretoise selon l'une des revendications précédentes, **caractérisée en ce que** les tranches de la protubérance (5) et de l'évidement correspondant (6) sont disposées parallèles entre elles.

6. Entretoise selon l'une des revendications précédentes, **caractérisée en ce que** l'entretoise présente deux ou plusieurs éléments (1), où respectivement un élément (1) s'engrène dans l'évidement (6) d'un second élément (1), avec la protubérance (6) de sa partie intermédiaire (2).

7. Utilisation d'une entretoise selon l'une quelconque des revendications 1 à 6, pour espacer des conducteurs liés (9) de câbles multiconducteurs dans un manchon de câbles (7) thermodurcissable avec une masse isolante.
